Europäisches Patentamt

European Patent Office

Office européen des brevets

(11) Publication number : **0 512 259 A2**

# (12) EUROPEAN PATENT APPLICATION

(21) Application number : **92105886.3**

(22) Date of filing : **06.04.92**

(51) Int. Cl.⁵ : **A23L 3/005, A23L 3/16, A21D 15/04, A21D 15/06**

(30) Priority : **11.04.91 IT VI910059**

(43) Date of publication of application :
**11.11.92 Bulletin 92/46**

(84) Designated Contracting States :
**DE ES FR GB NL**

(71) Applicant : **R.F. SYSTEMS Srl**
**Via Carbonara, 29**
**I-36061 Bassano del Grappa (VI) (IT)**

(72) Inventor : **Grando, Patrizio**
**P. Dal Monte, 9**
**I-36065 Mussolente (VI) (IT)**

(74) Representative : **Bonini, Ercole**
**c/o STUDIO ING. E. Bonini SAS 8 Corso Fogazzaro**
**I-36100 Vicenza (IT)**

(54) **Method for pasteurizing food products and pasteurizing machine suited to realize said method.**

(57) According to the invention a pasteurization method for food products is realized comprising a phase of quick heating of the product (10) by radio-frequency radiation, a phase of temperature maintaining of the product and a final phase of product unloading at the end of the treatment.

The pasteurizator which realizes such method comprises a heating tunnel (2), in which the product (10) to be pasteurized is heated when it passes through the plates (6,8) of a condenser (7) fed by a radio-frequency generator (4), and a temperature maintaining tunnel (3) in which the product (10) is kept in temperature by means of the circulation of air heated by a thermal exchange bank (37).

FIG.1

EP 0 512 259 A2

The invention concerns a method for the pasteurization of food products by means of a high-frequency treatment and a pasteurizator suited to realize such method.

It is known that several food products, particularly the food products made of fresh dough, like for example tortellini, lasagne and the like, must be marketed in a pasteurized form, i.e. after the bacteria contained in them, which could cause damage if ingested, are destroyed through a suitable treatment.

The traditional pasteurization method universally known and wide-spread consists in heating the product by means of traditional systems, for example through the circulation of hot air or steam. Such methods present the disadvantage of requiring a rather long time. It is known in fact that foods have a very low heat transmission coefficient, and consequently they require a long heating time before reaching the temperatures needed for the pasteurization treatment.

In order to reduce the treatment times, microwaves heating systems are also employed, by placing the product to be pasteurized under the action of a high frequency electromagnetic field with a frequency higher than 300 MHz.

Through such systems the heating takes place in shorter times than those of the traditional methods, but presents the disadvantage that the heating is substantially limited to the surface of the product, being thus not much penetrating. So the pasteurization treatment is incomplete and distributed in a non homogeneous manner in the product mass.

When the products are pasteurized in a loose state, i.e. not packaged, the heating to which they are subject causes the evaporation of the humidity contained in them and consequently their desiccation. In order to avoid this, and considering that an optimum pasteurization is that obtained in a humid ambient, the rooms in which the pasteurization treatment takes place are maintained saturated with steam.

Thus, at the end of the treatment the product contains more humidity than at the beginning and must necessarily be dried to reduce its humidity at the desired value. Obviously, this causes another disadvantage because it forces the maker to subject the product to another treatment, with a consequent increase in the costs and a prolongation of the cycle time.

In order to overcome the above mentioned limitations and disadvantages, the pasteurization method and the treatment plant of the invention are realized, the main goal of which is heating the product to be pasteurized much rapidly than using than the systems of the known type.

Another aim of the invention is that the heating is homogeneous and well distributed in the whole mass of the product under treatment.

Yet another aim of the invention is that during the pasteurization treatment the product is maintained in an ambient made humid by the evaporation of the humidity it contains, which thus does not get wasted.

Not the least scope of the invention is to realize a treatment in which at the end of the pasteurization process it is not necessary to dry the treated product.

The above mentioned aims are reached by the realization of a method for the pasteurization of food products which, according to the main claim, is characterized in that it comprises:

- a phase in which the product to be pasteurized is introduced in a heating tunnel by means of a loading belt carrier on which it is placed;
- a phase in which the product inside the heating tunnel is quickly heated by means of high frequency radiation in a treatment chamber, where said chamber has at least a movable wall for defining a variable treatment space;
- a phase in which the product is transferred from the loading belt carrier at the exit of the heating tunnel on an unloading belt carrier entering a temperature maintaining tunnel;
- a phase which maintains the temperature of the product inside a maintaining chamber belonging to said tunnel by means of hot air forced ventilation, said maintaining chamber preferably presenting at least one movable wall for defining a variable maintaining space;
- a phase in which the product is unloaded at the exit of the maintaining tunnel.

The above mentioned method is realized through a pasteurizator which comprises:

- a heating tunnel in which the product to be pasteurized enters by means of a loading belt carrier placed in the lower part of the tunnel along its whole length;
- a radio-frequency generator equipped with at least a condenser consisting of at least one couple of radiation plates placed inside the heating tunnel, where each upper plate is electrically connected with the generator by means of conductors and is arranged above the loading belt carrier surface on which the product to be pasteurized is placed, while each lower plate is connected to ground and is arranged below the belt and faced to the upper plate, under the product to be pasteurized;
- a radio-frequency transparent plate longitudinally arranged in the heating tunnel between at least one of said upper electrodes and the loading belt carrier surface;
- a tunnel for maintaining the temperature of the product, having in its lower part an unloading belt carrier on which the heated product coming from the heating tunnel is placed;
- a metallic plate longitudinally arranged in the temperature maintaining tunnel, above the unloading belt carrier;
- means for maintaining predetermined temperature levels in the tunnels.

According to a preferred form of execution, each of the two tunnels inside which the pasteurization treatment takes place is divided into two chambers hermetically separated from each other. More in detail, the lower chamber of each tunnel in which the belt supporting the product is placed is hermetically separated from the upper chamber, in which hot air circulates.

The generator which realizes the quick heating of the product in the pasteurizator consists of a self-excited C-class cavity oscillator generating a 27,12 MHz high frequency, powered by a transformer and a bridge rectifier.

Advantageously, the pasteurization method and the plant that realizes it, which are the object of the present invention, allow a more homogeneous pasteurization treatment than that of equivalent plants of the known type, since heat is uniformly distributed in the whole mass of the product. Advantageously, inside the treatment tunnels the separation between the zone in which the product is placed and the zone in which hot air circulates guarantees a more hygienic treatment, particularly in case of non packaged product. Furthermore, the pasteurization method and the plant which realizes it allow the material to maintain its own humidity unchanged during the whole process.

The above mentioned purposes and advantages will be better understood from the description of a preferred form of execution of the invention, which is only given by way of illustration, but is not meant to limit the scope of the invention, such as it is illustrated in the alleged tables of drawings, wherein:

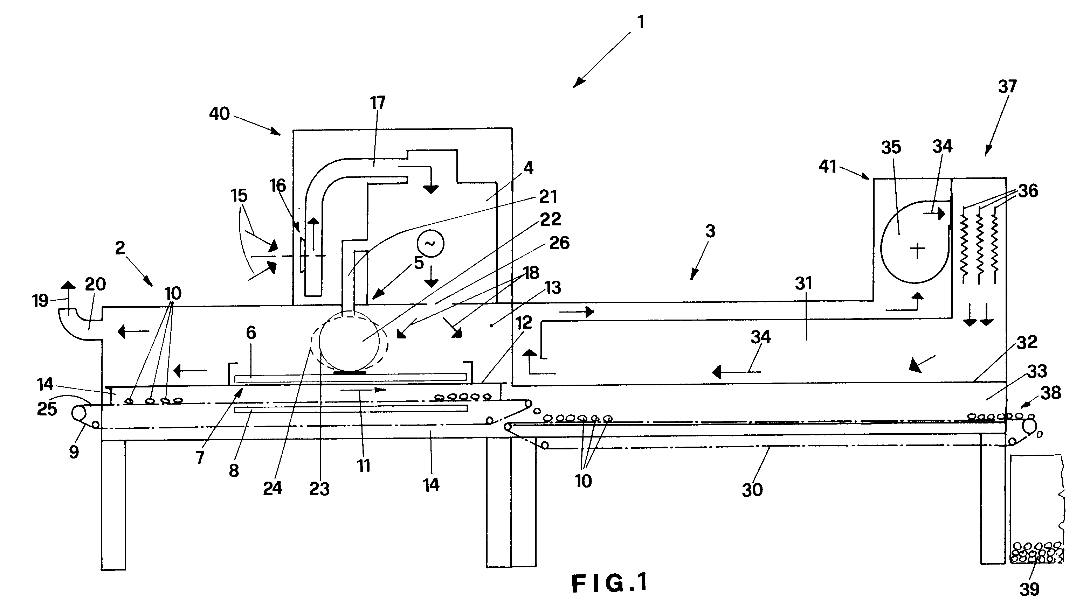

- fig. 1 shows a longitudinal section of the pasteurization plant of the invention.

As can be observed in fig. 1, the pasteurization plant of the invention, indicated as a whole with 1, consists of two lined up tunnels the first of which, indicated as a whole with 2, is the heating tunnel, while the other, indicated as a whole with 3, is the temperature maintaining tunnel.

With reference to the heating tunnel 2, it can be observed that in its upper part it supports a radio-frequency generator 4 which feeds, through the conductors 5, the upper plate 6 of a condenser, indicated as a whole with 7, the lower plate 8 of which is connected to ground. The upper plate 6 of the condenser 7 is arranged above the loading surface 25 of a loading belt 9 on which the product 10 to be treated is arranged.

It must be specified that, in the above described case, the product to be treated is not packaged. But it could be any solid or liquid packaged food product.

When the belt moves in the direction indicated with 11, the product 10 arrives in correspondence of the plates 6 and 8 of the condenser 7, where it is heated. In fact, the generator 4 is a self-excited C-class cavity oscillator of a known type which is powered by a transformer and a bridge rectifier. It produces between the plates 6 and 8 of the condenser 7 a radio-frequency field at 27.12 MHz, which creates the heating of the product 10 when it is inside the condenser itself.

This frequency value of 27.12 MHz is not strictly binding. Said frequency is selected only because it is homologated and thus, together with the other frequencies of 13.56 MHZ and 40.68 MHz, can be employed for heating in industrial usage. From a strictly technical point of view however, for the aims of the invention, any frequency could be advantageously employed, also different from the above mentioned ones. The heating of the product is very quick and this allows the reduction of the pasteurization cycle time.

Between the upper plate 6 of the condenser 7 and the load surface 25 of the belt carrier 9, i.e. between the upper plate 6 of the condenser 7 and the product to be treated 10, a plate is interposed made of a material transparent to radio-frequency, in our specific case a glass plate 12, which divides the heating tunnel 2 into two chambers, the upper chamber 13 and the treatment lower chamber 14. With reference to the upper chamber 13 of the heating tunnel 2, it can be observed that it communicates with the outside by means of a port 20 and communicates with the inside of the generator 4 by means of an opening 26. Through the opening 26 some air is introduced into the upper chamber 13, coming from the outside and having the direction indicated with 15; said air, through a main ventilation unit 40 consisting of a fan 16 and a pipe 17, is conveyed to lick up the hot parts of the radio-frequency generator 4, thus cooling it. Said air is then heated and enters with a direction 18 the upper chamber 13 of the heating channel 2, from which it goes out through the front mouth 20 with direction 19, after having passed through the chamber 13. It is necessary that said hot air circulation takes place in the upper chamber 13 during the heating treatment of the product 10 in the lower treatment chamber 14 of the tunnel 2, so that the whole tunnel 2 is at a uniform temperature. Moreover, the glass plate 12 which separates hermetically the upper chamber 13 from the lower treatment chamber 14, not only prevents the contact between the air and the product 10 being treated, but also avoids that during the treatment the water contained in the product evaporates and gets wasted, which is necessary in order to avoid the desiccation of the product. In fact the glass plate 12 avoids the wasting of the steam and the homogeneous temperature on its surface, due to the uniformity of the temperature inside the upper chamber 13 caused by hot air circulation 18, avoids the condensation of the steam on the glass plate 12 itself.

Furthermore, it can be observed that the glass plate is movable vertically in such a way as to vary its volume, comprised between the plate and the surface 25 of the belt 9, inside which the steam released by the product under treatment is collected. The upper plate 6 of the condenser 7 is vertically movable too in order to modify the electromagnetic field and to adjust the energy transferred to the product to be pasteurized according to its size, weight and amount.

In order to maintain the continuous electrical connection between the generator 4 and the upper plate 6 of the condenser 7 even when this is vertically moved by means of mechanical means of a known type (not represented in the figures), the conductor elements 5 which realize the electrical connection are formed by a fixed rigid conductor 21, connected to the radio-frequency generator and protruding toward the inside of the upper chamber 13 of the heating tunnel 2, and by a flexible conductor 22 made of conductor material, for example copper. Said flexible conductor 22, fixed at one end to the fixed rigid conductor 21 and at the opposite end to the surface of the upper plate 6 of the condenser 7, can get deformed elastically and can assume the configuration 23 or 24 represented in the figure, which allows it to maintain the electrical connection between the generator 4 and the upper plate 6 of the condenser 7 whatever is the position in which the upper plate 6 itself is moved.

When the heated material 10 reaches the end of the loading belt carrier 9, it falls by gravity on an unloading belt carrier 30 placed in the lower part of the temperature maintaining tunnel 3.

It is important to note that the belt 30, being independent from the belt 9, can be moved at a different speed with respect to the belt 9 itself. By adjusting the speed of the two belts in a different manner it is thus possible to realize different stay-times in the heating tunnel 2 and in the temperature maintaining tunnel 3.

As can be observed, also the tunnel 3 presents an upper chamber 31 hermetically separated by the wall 32 from the lower maintaining chamber 33 in which the belt carrier 30 slides. In the upper chamber 31 air is made to circulate in a closed circuit, by means of a secondary ventilation unit 41 composed of a fan 35 and with the direction indicated by the arrows 34, said air being heated by the electrical resistors 36 belonging to a heating bank 37 placed externally to the maintaining tunnel 3. The temperature can be modified by means of a thermostat. In this case too, the wall 32 assures the separation between the upper chamber 31 and the maintaining lower chamber 33 of the maintaining tunnel 3 but, at the same time, it assures the transmission of the heat to the material 10 to be treated, being the wall made of a conductor material, steel for example.

The constancy and uniformity of temperature in the upper chamber 31 and consequently in the product 10 is extremely important, because in the maintaining tunnel 3 the completion of the pasteurization action of the product 10 takes place, the action having been started in the heating tunnel 2. Also the wall 32 is adjustable in its vertical position by means of moving means of a known type, in such a way as to change the volume available between the wall 32 and the product 10 placed on the belt carrier 30.

At the end of the unloading belt carrier 30 the product exits through an opening 38 and falls by gravity inside a collecting container 39.

It is to be noted that the pasteurized product 10 at the exit of the maintaining oven 3 could be also conveyed inside a cooling tunnel of the known type.

According to what has been described, it can be understood that the pasteurization method and the plant that realizes it, which are the objects of the invention, fulfill all the desired goals.

More in detail, it has been seen that the pasteurization treatment takes place in shorter times than those of the known systems, and the quality of the pasteurized product is much better. In fact, since the heating is obtained through a generator which produces a radio-frequency field at 27.12 MHz, a deep heating of the material mass is obtained, contrary to known type processes employing microwaves. The pasteurization is thus better and more complete. Moreover it has been seen that during the treatment the humidity of the product is not changed, because during the heating the humidity it releases under steam form is not wasted in the ambient but remains confined in the heating tunnel 2 below the glass plate 12 and inside the temperature maintaining tunnel 3 below the wall 32 which delimits the upper chamber 31 in which hot air circulation takes place.

In the realization phase some improvements and modifications could be made to the parts of the invention, being well understood that all said variations and modifications are protected by the present invention.

## Claims

1)A method for the pasteurization of food products, characterized in that it comprises:
- a phase in which the product 10 to be pasteurized is introduced inside a heating tunnel (2) by means of a loading belt carrier (9) on which the product is placed;
- a quick heating phase of the product (10) inside the heating tunnel (2) through radio-frequency radiation in a treatment chamber (14), said chamber having at least one movable wall (12) suitable to define a treatment space;
- a phase of the product (10) transfer from the loading belt carrier (9), at the exit of the heating tunnel (2), to an unloading belt carrier (30) entering a temperature maintaining tunnel (3);
- a phase in which the temperature of the product is kept constant inside a maintaining chamber (33) belonging to said tunnel (3) by means of hot air forced ventilation, said maintaining chamber (33) presenting preferably at least one movable wall (32) suitable to define a variable maintaining space;

- a phase in which the product (10) is unloaded at the exit of the maintaining tunnel (3).

2) A pasteurizator suitable to realize the pasteurization method according to claim 1), characterized in that it comprises:

- a heating tunnel (2) in which the product (10) to be pasteurized is introduced by means of a loading belt carrier (9) placed in the lower part of the tunnel and along its whole length;
- a radio-frequency generator (4), having at least one condenser (7) consisting of at least one couple of radiation plates (6,8) placed inside the heating tunnel (2), where each upper plate (6) is electrically connected to the generator (4) through conductors (5) and is arranged above the surface (25) of the loading belt carrier (9) on which the product (10) to be pasteurized is placed, whereas each lower plate (8) is connected to ground and is arranged below the belt (9) under the product (10) to be pasteurized and facing the upper plate (6);
- a plate (12) made of material transparent to radio-frequencies, longitudinally arranged in the heating tunnel (2) between said at least one upper electrode (6) and the surface (25) of the loading belt carrier (9);
- a tunnel (3) for maintaining the temperature of the product (10), presenting in the lower part an unloading belt carrier (30) on which the heated product (10) coming from the heating tunnel (2) is placed;
- a metallic plate (32) longitudinally arranged in the temperature maintaining tunnel (3) above the unloading belt carrier (30);
- means (40,41) for maintaining the tunnels (2,3) at fixed temperatures;

3) A pasteurizator according to claim 2), characterized in that the plate (12) made of material transparent to radio-frequencies and arranged longitudinally inside the heating tunnel (2) realizes two separated chambers inside said tunnel, one of which is an upper chamber (13) communicating with temperature maintaining means (40), and the other is a lower treatment chamber (14) in which the loading belt carrier (9) is placed on which the product (10) to be treated is distributed.

4) A pasteurizator according to claim 2), characterized in that the metallic plate (32) longitudinally arranged inside the temperature maintaining tunnel (3) realizes two separated chambers inside said tunnel, one of which is an upper chamber (31) communicating with temperature maintaining means (41), while the other is a lower maintaining chamber (33) in which the unloading belt carrier (30) is placed.

5) A pasteurizator according to claim 2), characterized in that the conductors (5) which electrically connect the radio-frequency generator (4) and the condenser (7) are a fixed rigid conductor (21) connected to the radio-frequency generator, the end protruding toward the inside of the heating tunnel (2) being fixed to a flexible conductor (22) electrically connected to the upper plate (6) of the condenser (7).

6) A pasteurizator according to claim 2), characterized in that the upper plate (6) of the condenser (7) is vertically adjustable by means of known movement means.

7) A pasteurizator according to claim 2), characterized in that the plate (12) made of material transparent to radio-frequencies, placed inside the heating tunnel (2), is vertically adjustable by means of known movement means.

8) A pasteurizator according to claim 2), characterized in that the metallic plate (32) placed inside the temperature maintaining tunnel (3), is vertically adjustable by means of known movement means.

9) A pasteurizator according to claim 2), characterized in that the means which maintain the heating tunnel (2) at the preselected temperature are at least one main ventilation unit (40) comprising a fan (16) which, through an opening (26), conveys the cooling air of the radio-frequency generator (4) in an open-cycle inside the upper chamber (13) of the tunnel itself.

10) A pasteurizator according to claim 2), characterized in that the means which maintain the temperature maintaining tunnel (3) at the preselected temperature are at least one secondary ventilation unit (41) comprising a fan (35) which conveys the air heated by a thermal exchange bank (37) in a closed-cycle inside the upper chamber (31) of the tunnel itself.

11) A pasteurizator according to claim 9), characterized in that the thermal exchange bank (37) is a plurality of electric resistors (36) provided with a regulation thermostat.

12) A pasteurizator according to claim 2), characterized in that the radio-frequency transparent plate is made of glass.

**F I G .1**

EP 0 512 259 A2